# EUROPEAN PATENT SPECIFICATION

(11) **EP 3 557 368 B1**
(45) Date of publication and mention of the grant of the patent: **18.08.2021**
(21) Application number: 17880367.2
(22) Date of filing: 04.12.2017
(51) Int. Cl.: F16H 61/24, F16H 59/10, G05G 5/06, G05G 1/04, G05G 25/00, G05G 5/03, B60K 20/02

(54) **CONTROL DEVICE**
STEUERUNGSVORRICHTUNG
DISPOSITIF DE COMMANDE

(30) Priority: 14.12.2016 JP 2016241838
(43) Date of publication of application: 23.10.2019
(73) Proprietor: Alps Alpine Co., Ltd., Tokyo 145-8501 (JP)
(72) Inventor: WATANABE, Shogo, Tokyo 145-8501 (JP); TAKEUCHI, Genki, Tokyo 145-8501 (JP); ARATA, Tsuyoshi, Tokyo 145-8501 (JP)
(74) Representative: Schmitt-Nilson Schraud Waibel Wohlfrom Patentanwälte Partnerschaft mbB
(86) International application number: PCT/JP2017/043417
(87) International publication number: WO 2018/110339

(56) References cited:
- EP-A2- 3 106 716
- DE-A1-102012 210 810
- JP-A- 2006 060 176
- JP-A- 2008 140 697
- KR-B1- 101 341 131

## Description

### Technical Field

The present invention relates to an operating device that generates a click feeling when an operation is performed.

### Background Art

The structure of a shifter using a mechanical mechanism (cam) for generating a click feeling when an operation is performed in a vehicle equipped with an automatic transmission, is disclosed.

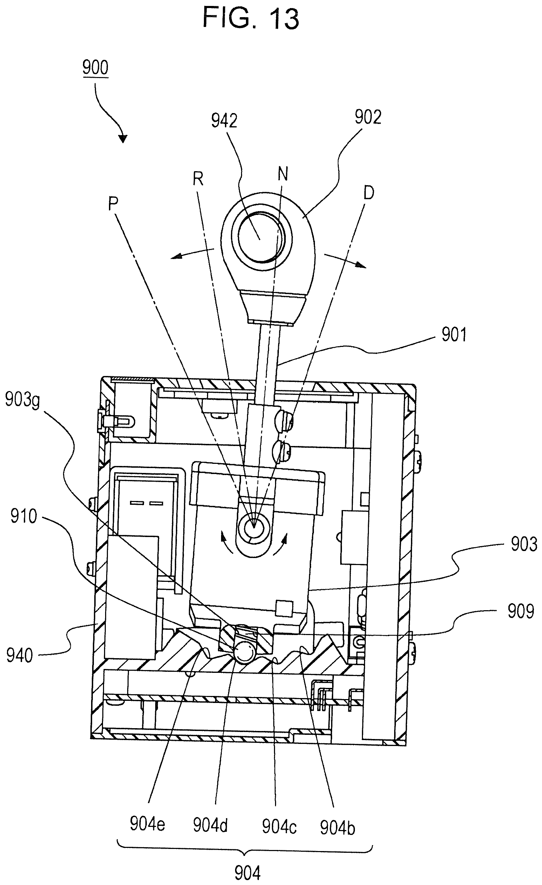

Fig. 13 is a cross-sectional view showing an automatic transmission shift operating device 900 disclosed in Patent Literature 1. The automatic transmission shift operating device 900 is mounted on a vehicle equipped with an automatic transmission and performs a shift operation to a desired driving position among driving positions such as run, stop, and park. A shift lever 901 is composed of, for example, a bar-like tube made of metal, a knob 902 is fixed to the upper end of the shift lever 901, a holder 903 is fixed to the lower end of the shift lever 901, and the shift lever 901 is pivotally supported by a first shaft and a second shaft disposed within a case 940. The shift lever 901 has the knob 902 fixed to the upper end as shown in Fig. 13, and the knob 902 is covered with a flexible resin or skin and has a pseudo select button 942. A blind hole 903g for inserting a click spring 909 and a click body 910 is bored in a lower end portion of the holder 903. The click body 910 biased by the click spring 909 is brought into pressure contact with a click groove 904 formed on an inner bottom of the case 940, and supports the shift lever 901 at each position (P, R, N, D), or automatically returns the shift lever 901. In the click groove 904, a first click groove 904b for supporting the shift lever 901 at a P range, a second click groove 904c for supporting the shift lever 901 at a R range, a third click groove 904d for supporting the shift lever 901 at a N range, and a fourth click groove 904e for supporting the shift lever 901 at a D range are formed so as to be arranged in a front-rear direction as shown in Fig. 13.

When the shift lever 901 is operated, a click feeling is obtained by the click body 910 biased by the click spring 909. It is possible to adjust this operation feeling to an appropriate intensity by the biasing force of the click spring 909. KR 101 341 131 B1 discloses an operating device comprising the features of the preamble of Claim 1.

### Citation List

### Patent Literature

PTL 1: Japanese Unexamined Patent Application Publication No. 2002-144905

### Summary of Invention

### Technical Problem

However, since the automatic transmission shift operating device 900 has a structure in which the click body is brought into contact with a cam surface by the click spring, there is a problem that the biasing force at each click groove (recess) of the cam becomes lowest, a force holding the operation lever is weak, and the operation lever is shaky. In addition, when the holding force is increased, the biasing force at each projection of the cam is increased more than needed, so that there is a problem that an operation feeling from the operation lever is deteriorated or the projection is worn and the life of the device becomes shortened.

The present invention has been made in view of such circumstances of the related art, and an object of the present invention is to provide an operating device that provides a good operation feeling.

### Solution to Problem

In order to solve the above problem, an operating device according to the present invention is an operating device including an operation lever, a housing, and a click generation mechanism connected to the operation lever and housed in the housing, the operating device generating a click feeling when the operation lever is operated. The click generation mechanism includes a cam member fixed to the housing and having a cam surface on which a recess and a projection are formed, a contact member configured to come into contact with the cam member, a restriction member configured to restrict a movement direction of the contact member, a biasing force generation means configured to bias the contact member in the movement direction, and a magnetic sensor fixed to the housing. The restriction member is supported by the housing so as to be rotationally movable in conjunction with the operation lever. The biasing force generation means includes a pair of magnetic bodies at least either of which has a permanent magnet. The pair of magnetic bodies are supported by the restriction member such that the magnetic bodies rotationally move in conjunction with the restriction member and are movable in an approaching/separating direction in a state where the magnetic bodies are attracted to each other. The contact member is biased to the cam surface by an attraction force between the pair of magnetic bodies. When the operation lever is rotationally operated, the click feeling is generated through a change of a sliding load between the cam surface and the contact member.

In the operating device configured as described above, since the attraction forces of the magnetic bodies are used as a biasing force with respect to the contact member, the biasing force at the recess of the cam member becomes maximum, so that it is possible to inhibit shaking of the operation lever. In addition, even when the recess is worn, a direction in which the recess is worn is a direction in which the biasing force is further increased, and thus it is possible to extend the life. Therefore, it is possible to obtain the operating device that provides a good operation feeling.

In the above configuration, a change of a magnetic flux of the pair of magnetic bodies that rotationally move is detected by the magnetic sensor.

In the operating device configured as described above, since the magnetic bodies used for generating a click feeling when operation is performed as also used for detecting a change of a magnetic flux due to a rotary operation, a magnet dedicated for detecting a magnetic flux is not required. Thus, it is possible to produce the operating device at low cost.

In the above configuration, the cam member is formed in substantially an annular shape, and the pair of magnetic bodies are disposed within the cam member.

In the operating device configured as described above, since it is possible to dispose the pair of magnetic bodies within the cam member, it is possible to improve the space efficiency.

In the above configuration, the cam surface includes a pair of cam surfaces formed on the cam member, and the pair of cam surfaces are located so as to be point symmetrical with each other about an imaginary central axis.

In the operating device configured as described above, since the pair of cam surfaces are located so as to be point symmetrical with each other about the imaginary central axis, it is possible to obtain a stronger click feeling.

In the operating device according to the present invention, the magnetic sensor is disposed on the imaginary central axis.

In the operating device configured as described above, since the magnetic sensor is disposed on the imaginary central axis, it is possible to efficiently detect a change of a magnetic flux.

### Advantageous Effects of Invention

In the operating device according to the present invention, since the attraction forces of the magnetic bodies are used as a biasing force with respect to the contact member, the biasing force at the recess of the cam member becomes maximum, so that it is possible to inhibit shaking of the operation lever. In addition, even when the recess is worn, a direction in which the recess is worn is a direction in which the biasing force is further increased, and thus it is possible to extend the life. Therefore, it is possible to obtain the operating device that provides a good operation feeling.

### Brief Description of Drawings

[Fig. 1] Fig. 1 is a block diagram showing the configuration of an operating device of an embodiment of the present invention.
[Fig. 2] Fig. 2 is a perspective view showing the appearance of a click generation mechanism in the operating device.
[Fig. 3] Fig. 3 is a front view of the click generation mechanism in the operating device.
[Fig. 4] Fig. 4 is a side view of the click generation mechanism in the operating device as seen from an X2 side.
[Fig. 5] Fig. 5 is an exploded perspective view showing the click generation mechanism in the operating device.
[Fig. 6] Fig. 6 is an external view showing a cam member and is a side view as seen from the X2 side.
[Fig. 7] Fig. 7 shows external views of a biasing force generation means, Fig. 7(a) is a side view as seen from the X2 side, Fig. 7(b) is a plan view of the biasing force generation means, and Fig. 7(c) is a bottom view of the biasing force generation means.
[Fig. 8] Fig. 8 shows external views of a restriction member, Fig. 8(a) is a front view, and Fig. 8(b) is a side view as seen from an X1 side.
[Fig. 9] Fig. 9 is a cross-sectional view showing the internal structure of the click generation mechanism.
[Fig. 10] Fig. 10 is an explanatory diagram showing operation of the biasing force generation means and is an explanatory diagram showing a stable state where a contact member is received in a recess of the cam member.
[Fig. 11] Fig. 11 is an explanatory diagram showing operation of the biasing force generation means and is an explanatory diagram showing a transient state where the contact member is located at a projection of the cam member.
[Fig. 12] Fig. 12 is an explanatory diagram showing a magnetic line of force of a pair of magnetic bodies in the state in Fig. 11 in a plan view.
[Fig. 13] Fig. 13 is a cross-sectional view showing an existing automatic transmission shift operating device. Description of Embodiments

### [Embodiment]

Hereinafter, an embodiment of the present invention will be described in detail with reference to the drawings. It should be noted that for easy understanding, dimensions are changed as appropriate in each drawing.

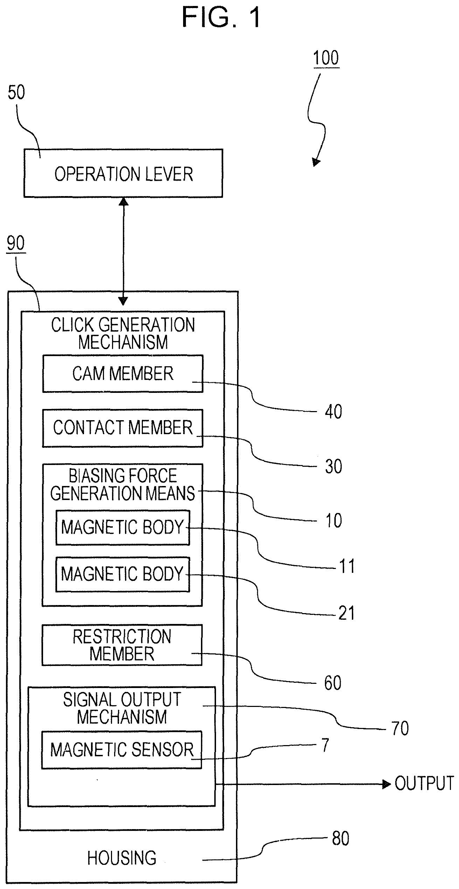

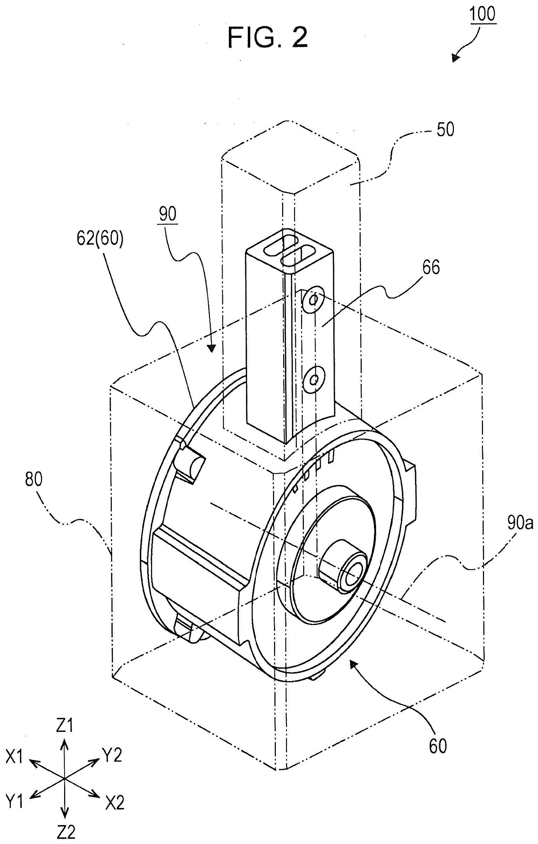

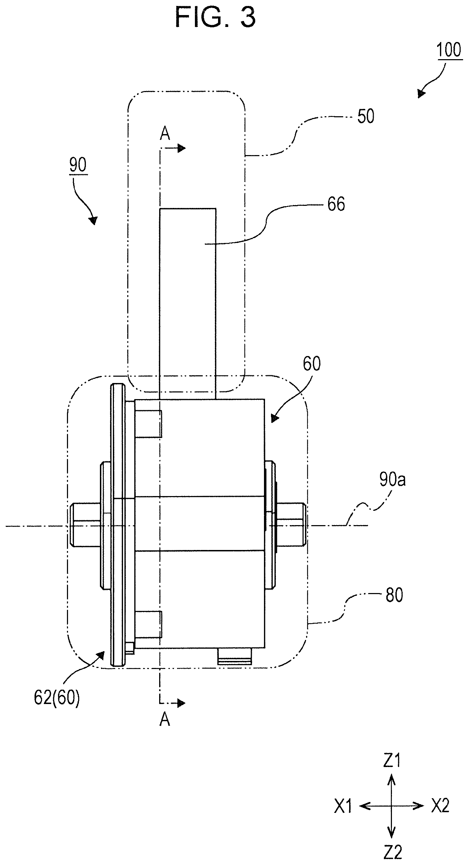

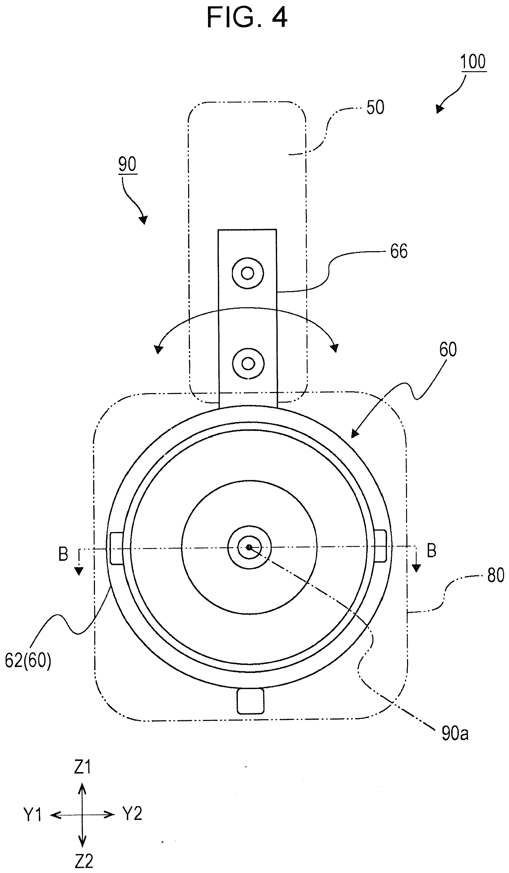

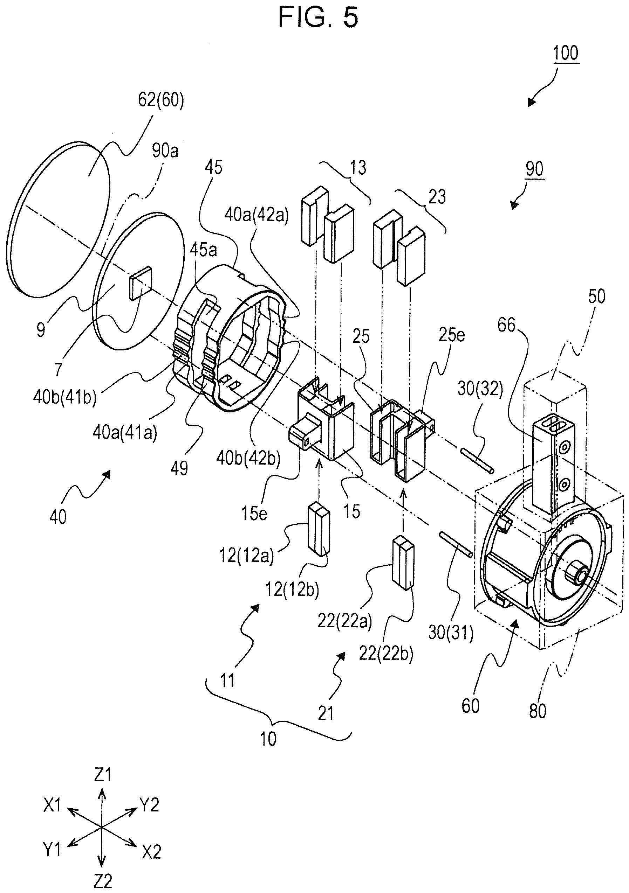

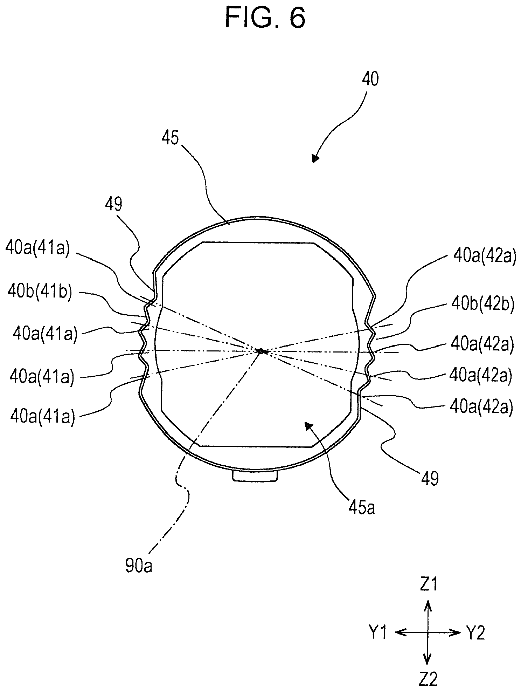

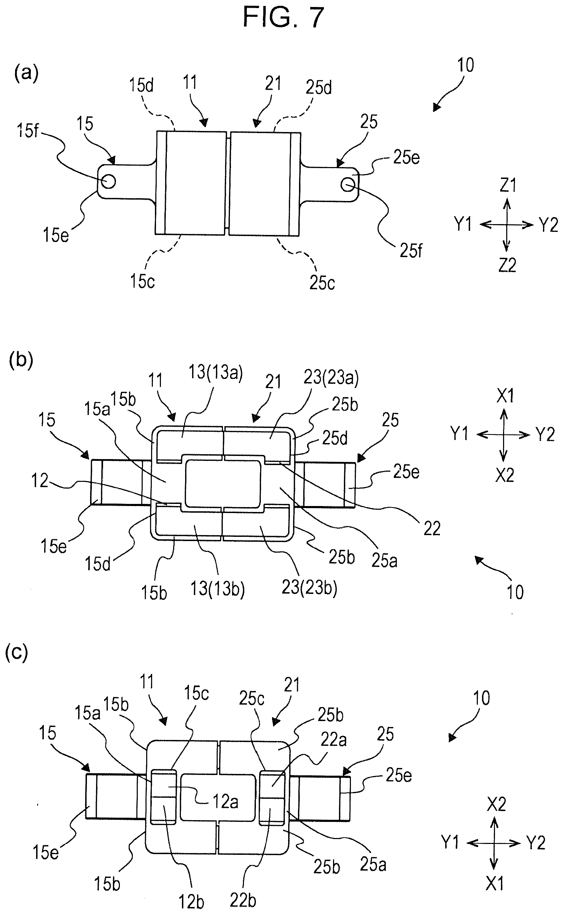

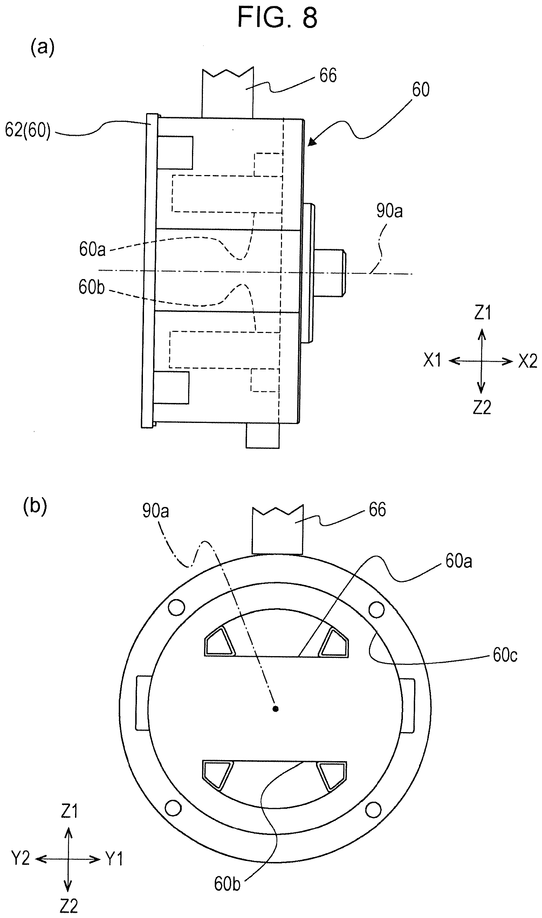

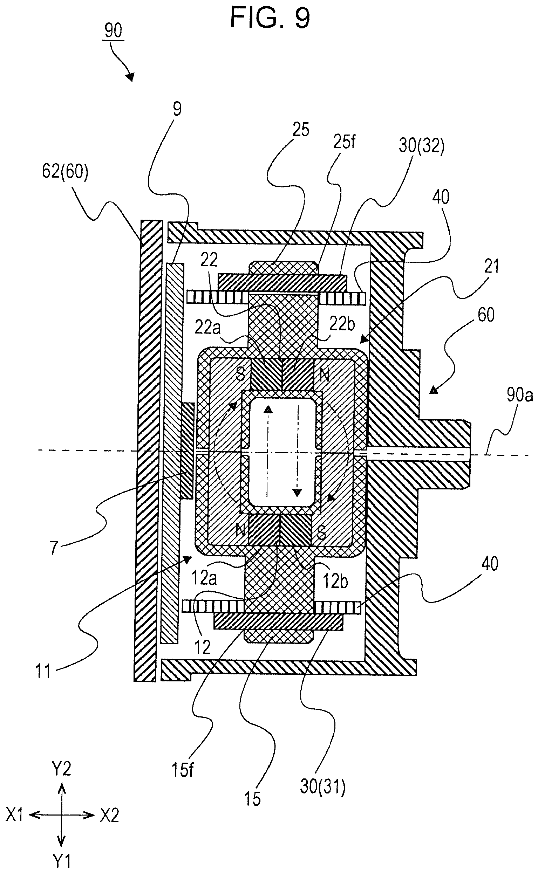

Fig. 1 is a block diagram showing an operating device 100 of the embodiment of the present invention, Fig. 2 is a perspective view showing a click generation mechanism 90 in the operating device 100, and Fig. 3 is a front view of the click generation mechanism 90 in the operating device 100 as seen from a Y1 side. Fig. 4 is a side view of the click generation mechanism 90 in the operating device 100 as seen from an X2 side, and Fig. 5 is an exploded perspective view showing the click generation mechanism 90 in the operating device 100. Moreover, Fig. 6 is an external view showing a cam member 40 and is a side view as seen from the X2 side. Fig. 7 shows external views of a biasing force generation means 10, Fig. 7(a) is a side view as seen from the X2 side, Fig. 7(b) is a plan view of the biasing force generation means 10, and Fig. 7(c) is a bottom view of the biasing force generation means 10. Furthermore, Fig. 8 shows external views of a restriction member 60, Fig. 8(a) is a front view as seen from the Y1 side, and Fig. 8(b) is a side view as seen from an X1 side. Fig. 9 is an explanatory diagram showing the internal structure of the click generation mechanism 90 and is a cross-sectional schematic view of a cross-section taken along a line B-B in Fig. 4, as seen from a Z1 side.

As shown in Fig. 1, the operating device 100 of the present embodiment includes an operation lever 50, a housing 80, and the click generation mechanism 90 that is connected to the operation lever 50 and housed in the housing 80. The operating device 100 is able to generate a click feeling when the operation lever 50 is operated.

The operating device 100 detects the position of the operation lever 50 when the operation lever 50 is operated, as a rotation angle based on a line extending in a Z1 direction perpendicular to an imaginary central axis 90a shown in Fig. 4, and outputs the rotation angle to an external device. The operating device 100 of the present embodiment detects a change of the rotation angle by a change of a magnetic flux generated when the operation lever 50 is operated.

The click generation mechanism 90 of the operating device 100 is as shown in Fig. 2 to Fig. 9, and the specific configuration thereof will be described below. It should be noted that it is possible to add a mechanism for providing an operation feeling, to the operating device 100 in addition to the click generation mechanism 90 shown in Fig. 2 to Fig. 9, but the description of the other portion is omitted in the present specification. In addition, the description of the shapes of the operation lever 50 and the housing 80 and a connection mechanism of the operation lever 50 and the restriction member 60 is also omitted. Thus, for the sake of convenience, the shapes of the operation lever 50 and the housing 80 are represented as substantially rectangular parallelepiped shapes by two-dot chain lines in each drawing.

As shown in Fig. 1, the click generation mechanism 90 includes the cam member 40, a contact member 30, the biasing force generation means 10, the restriction member 60, and a signal output mechanism 70 within the housing 80. The biasing force generation means 10 in the present embodiment includes a pair of magnetic bodies 11 and 21. In the present embodiment, the operation lever 50 is connected to the restriction member 60, and the restriction member 60 is configured to move relative to the housing 80 when the operation lever 50 is operated.

The signal output mechanism 70 includes an electronic circuit for outputting information about the position of the operation lever 50. The electronic circuit includes a magnetic sensor 7. When the operation lever 50 is operated, the electronic circuit generates a signal and outputs the signal to the outside.

In the present embodiment, the cam member 40 is fixed to the housing 80, and is configured such that the restriction member 60 rotates when the operation lever 50 is operated. The cam member 40 is formed from a synthetic resin, and includes an annular portion 45 formed in substantially an annular shape as shown in Fig. 5 and Fig. 6. A pair of cam surfaces 49 are formed on the outer side of the annular portion 45 of the cam member 40. The pair of cam surfaces 49 are located so as to be point symmetrical with each other about the imaginary central axis 90a.

Recesses 40a (41a, 42a) and projections 40b (41b, 42b) are formed on each of the pair of cam surfaces 49. In the present embodiment, four recesses 41a and four recesses 42a are located so as to be point symmetrical with each other about the imaginary central axis 90a for rotation shown in Fig. 5 and Fig. 6, and three projections 41b and three projections 42a are located so as to be point symmetrical with each other about the imaginary central axis 90a. In addition, as shown in Fig. 5, in each of the pair of cam surfaces 49, an opening 45a having a substantially rectangular shape having long sides in a Z1-Z2 direction is provided at substantially a center portion in an X1-X2 direction of the recesses 40a (41a, 42a) and the projections 40b (41b, 42b) of the annular portion 45. In other words, each of the pair of cam surfaces 49 is divided into two portions at the X1 side and the X2 side by the opening 45a.

The biasing force generation means 10 is configured to include the pair of magnetic bodies 11 and 21 as shown in Fig. 5. The biasing force generation means 10 includes: a holder member 15 that integrally holds a permanent magnet 12 and a yoke 13 that form the magnetic body 11; a holder member 25 that integrally holds a permanent magnet 22 and a yoke 23 that form the magnetic body 21.

The holder member 15 is formed from a synthetic resin, and has a first holding portion 15a for holding the permanent magnet 12, a second holding portion 15b for holding the yoke 13 (13a, 13b), and a supporting portion 15e for supporting the contact member 30, as shown in Fig. 7. A hole 15f for inserting the contact member 30 is formed in the supporting portion 15e.

In the present embodiment, the first holding portion 15a of the holder member 15 has a first opening 15c for inserting the permanent magnet 12, in a surface at a Z2 side. In addition, of the first holding portion 15a is closed at the Z1 side thereof by a wall surface of the holder member 15. Thus, when inserting the permanent magnet 12 into the first opening 15c, the permanent magnet 12 only needs to be pushed in until the permanent magnet 12 comes into contact with the wall surface at the Z1 side.

Furthermore, the second holding portion 15b of the holder member 15 has a second opening 15d for inserting the yoke 13 (13a, 13b), in a surface at the Z1 side, and the holder member 15 is disposed such that the first opening 15c and the second opening 15d face in directions different from each other. The yoke 13 (13a, 13b) and the second opening 15d each have an L shape as seen from the Z1 side and also serves to prevent coming-out in a Y2 direction. In addition, the second holding portion 15b is closed at the Z2 side thereof by the wall surface of the holder member 15. Thus, when inserting the yoke 13 (13a, 13b) into the second opening 15d, the yoke 13 (13a, 13b) only needs to be pushed in until the yoke 13 (13a, 13b) comes into contact with the wall surface at the Z2 side. Moreover, when inserting the permanent magnet 12 into the first holding portion 15a after the yoke 13 (13a, 13b) is inserted into the second holding portion 15b, there is no concern that the yoke 13 (13a, 13b) comes out of the second opening 15d or attaches to the permanent magnet 12, so that these components are very easily handled.

In the present embodiment, the holder member 15 has a shape in which an opening is provided in the X1-X2 direction of the first holding portion 15a such that the permanent magnet 12 and the yoke 13 (13a, 13b) inserted into the holder member 15 are brought into contact with each other. The permanent magnet 12 inserted into the first holding portion 15a acts to attract the yoke 13 (13a, 13b) inserted into the second holding portion 15b, and thus is fixed by a magnetic force after assembling. Therefore, the permanent magnet 12 and the yoke 13 (13a, 13b) are integrally held by the holder member 15 without using an adhesive or the like. Accordingly, production is easy even when size reduction is achieved.

The direction of the second opening 15d is not limited to the direction shown in Fig. 7, and only needs to be a direction other than the direction of the first opening 15c and the direction of a surface facing the magnetic body 21. The holder member 15 of the present embodiment is disposed such that the first opening 15c and the second opening 15d face in direction opposite to each other, and thus the wall surfaces that define the first opening 15c and the second opening 15d also serve for reinforcement as a rib. Thus, the holder member 15 of the present embodiment is less likely to deform.

As described above, the biasing force generation means 10 includes the holder member 25 that integrally holds the permanent magnet 22 and the yoke 23, which form the magnetic body 21. The holder member 25 is formed from a synthetic resin, and has a first holding portion 25a for holding the permanent magnet 22, a second holding portion 25b for holding the yoke 23 (23a, 23b), and a supporting portion 25e for supporting the contact member 30, as shown in Fig. 7. A hole 25f for inserting the contact member 30 is formed in the supporting portion 25e.

The first holding portion 25a of the holder member 25 has a first opening 25c for inserting the permanent magnet 22, in a surface at the Z2 side. In addition, the first holding portion 25a is closed at the Z1 side thereof by a wall surface of the holder member 25. The second holding portion 25b of the holder member 25 has a second opening 25d for inserting the yoke 23 (23a, 23b), in a surface at the Z1 side, and the holder member 25 is disposed such that the first opening 25c and the second opening 25d face in directions different from each other.

In the present embodiment, as shown in Fig. 7, the holder member 25, which integrally holds the permanent magnet 22 and the yoke 23 which form the magnetic body 21, has exactly the same structure as the holder member 15. That is, the holder member 25 is a holder member obtained by rotating the holder member 15, by which the permanent magnet 12 and the yoke 13 (13a, 13b) are integrally held, about the Z1-Z2 direction by 180 degrees. When two pairs of permanent magnets and yokes having exactly the same structure are prepared and disposed in such directions that the permanent magnets and the yokes face each other, the permanent magnets and the yokes are disposed such that a magnetic attraction force is generated. A biasing force generated by the biasing force generation means 10 is a magnetic attraction force between the pair of magnetic bodies 11 and 21.

As shown in Fig. 9, the permanent magnet 12, which forms a part of the magnetic body 11, includes a permanent magnet 12a and a permanent magnet 12b, and the permanent magnet 22, which forms a part of the magnetic body 21, includes a permanent magnet 22a and a permanent magnet 22b. The permanent magnet 12a and the permanent magnet 12b, and the permanent magnet 22a and the permanent magnet 22b, are held such that different magnetic poles are arranged in the X1-X2 direction, respectively, as seen from the Z1 side.

Thus, in the pair of magnetic bodies 11 and 21, the magnetic pole arrangement of the permanent magnet 12 and the magnetic pole arrangement of the permanent magnet 22 face each other in opposite directions, a magnetic line of force forms a closed loop via the yoke 13 (13a, 13b) and the yoke 23 (23a, 23b), and a magnetic circuit is efficiently disposed. As a result, even with small permanent magnets 12 and 22, it is possible to enhance a magnetic force.

The holder members 15 and 25, which hold the magnetic bodies 11 and 21, rotate in conjunction with the restriction member 60, and are supported by the restriction member 60 such that the holder members 15 and 25 are movable in an approaching/separating direction in a state where the holder members 15 and 25 are attracted to each other by an attraction force between the pair of magnetic bodies 11 and 21.

The restriction member 60 is formed from a synthetic resin. As shown in Fig. 2 to Fig. 5, the restriction member 60 is disposed such that an end portion thereof at the X1 side and a cover 62 fixed to the housing 80 face each other with a small gap therebetween, and is supported by the housing 80 so as to be rotatable in conjunction with the operation lever 50. A connection portion 66 is formed on the restriction member 60 so as to project in the Z1 direction, and the operation lever 50 is connected to the restriction member 60 via the connection portion 66. As shown in Fig. 4, the operation lever 50 is operated by being rotated about the imaginary central axis 90a.

A cylindrical wall surface 60c and restriction portions 60a and 60b are formed in the restriction member 60 as shown in Fig. 8. The cylindrical wall surface 60c of the restriction member 60 is formed so as to be in slide contact with the outer circumference of the annular portion 45 of the cam member 40, and is a cylindrical surface centered on the imaginary central axis 90a for rotation. Meanwhile, the restriction portions 60a and 60b of the restriction member 60 are formed so as to be in slide contact with the holder members 15 and 25, which hold the pair of magnetic bodies 11 and 21. The restriction portions 60a and 60b each include, at a plurality of locations, a projection portion that projects at the X1 side, and these projections restrict movement in the Z1-Z2 direction of the holder member 15 or 25 and guide movement in a Y1-Y2 direction of the holder member 15 or 25 such that the holder member 15 or 25 is slidable.

The contact member 30 is formed in a columnar shape from a metal material as shown in Fig. 5. In the present embodiment, the contact member 30 is divided into a contact member 31 fixed to the supporting portion 15e of the holder member 15 and a contact member 32 fixed to the supporting portion 25e of the holder member 25. As described above, the holes 15f and 25f into which the contact member 30 (31, 32) is inserted are formed in the supporting portions 15e and 25e, respectively. The contact members 31 and 32 are fixed by press-fitting the contact members 31 and 32 into the holes 15f and 25f as shown in Fig. 9. The contact members 31 and 32 may be rotatably supported at this position by a shaft.

As shown in Fig. 5 and Fig. 9, a wiring board 9 is mounted on an end portion at the X1 side of the above-described cam member 40, and the cam member 40 and the wiring board 9 are fixed to the housing 80 together with the cover 62. In addition, the magnetic sensor 7 is provided on a center portion of the wiring board 9. Therefore, the magnetic sensor 7 is located at the X1 side of the center in the Y1-Y2 direction of a space within the cam member 40 formed in an annular shape. The magnetic sensor 7 is provided to detect a change of a magnetic flux near the magnetic sensor 7.

As described above, the operating device 100 detects a change of the rotation angle when the operation lever 50 is operated, by a change of a magnetic flux generated when the operation lever 50 is operated. When the operation lever 50 is rotationally operated, the restriction member 60 connected to the operation lever 50 rotates, and the magnetic bodies 11 and 21 rotate with the rotation of the restriction member 60.

As described above, the magnetic sensor 7 is located at the X1 side of the center in the Y1-Y2 direction of the space within the cam member 40 formed in an annular shape. That is, the magnetic sensor 7 is located on the imaginary central axis 90a. Meanwhile, as shown in Fig. 9, the pair of magnetic bodies 11 and 21 are disposed within the cam member 40 formed in substantially an annular shape, the permanent magnet 12 (12a, 12b) within the magnetic body 11 and the permanent magnet 22 (22a, 22b) within the magnetic body 21 are disposed with a predetermined distance therebetween and are also disposed with a predetermined distance to the magnetic sensor 7. In other words, the magnetic sensor 7 is efficiently disposed on the closed loop that is the magnetic line of force formed between the permanent magnet 12 and the permanent magnet 22.

Since the magnetic sensor 7 is efficiently disposed on the closed loop that is the magnetic line of force formed between the permanent magnet 12 and the permanent magnet 22 as described above, it is possible to accurately detect a change of a magnetic flux generated when the operation lever 50 is rotationally operated. As a result, it is possible to accurately detect a rotation angle of the operation lever 50.

As described above, the operating device 100 includes the cam member 40, the restriction member 60, the contact member 30, and the pair of magnetic bodies 11 and 21 including the permanent magnets 12 and 22. These members are provided to generate a click feeling when operation is performed. Operation for generating a click feeling will be described in detail later.

In the operating device 100 according to the present invention, the permanent magnets 12 and 22 are used to generate a click feeling when operation is performed, and are also used to detect a rotation angle of the operation lever 50 as described above. That is, the permanent magnets 12 and 22 serve to generate an operation click feeling and detect a rotation angle. Thus, the operating device 100 does not require a magnet dedicated for detecting a change of a magnetic flux due to a rotational operation on the operation lever 50.

In the operating device 100 of the present embodiment, the click generation mechanism 90 is assembled as described below.

The holder member 15 by which the permanent magnet 12 and the yokes 13a and 13b are held and the holder member 25 by which the permanent magnet 22 and the yokes 23a and 23b are held are inserted into the cam member 40 such that the supporting portions 15e and 25e project into the opening 45a of the cam member 40. Since both holder members have magnetic forces by which both holder members are attracted to each other, a spacer jig is preferably disposed in advance to allow the next work to be easily performed.

Subsequently, the contact member 31 is fixed into the hole 15f of the supporting portion 15e of the holder member 15, and the contact member 32 is fixed into the hole 25f of the supporting portion 25e of the holder member 25. At this time, the contact members 31 and 32 are positioned in advance such that the contact members 31 and 32 are disposed in the recesses 41a and 42a as seen from the imaginary central axis 90a for rotation.

Next, the spacer jig is removed, and these members are housed in the cylindrical wall surface 60c of the restriction member 60. At this time, the holder members 15 and 25 are disposed at desired positions such that the holder members 15 and 25 are guided to the projection portions of the restriction portions 60a and 60b of the restriction member 60. The restriction portions 60a and 60b restrict movement in the Z1-Z2 direction of the holder members 15 and 25 such that the holder members 15 and 25 are movable only in the Y1-Y2 direction. Since movement directions of the holder members 15 and 25 are restricted, the restriction member 60 does not have to be provided at the positions of the contact members 31 and 32. Thus, the restriction portions 60a and 60b of the restriction member 60 are easily disposed, and size reduction is easily achieved.

Finally, the cover 62, the wiring board 9 having the magnetic sensor 7 mounted thereon, and the cam member 40 are fixed to the housing 80 by a fixing member (not shown). In the operating device 100, the click generation mechanism 90 assembled as described above is disposed and assembled together with the operation lever 50 and the other components.

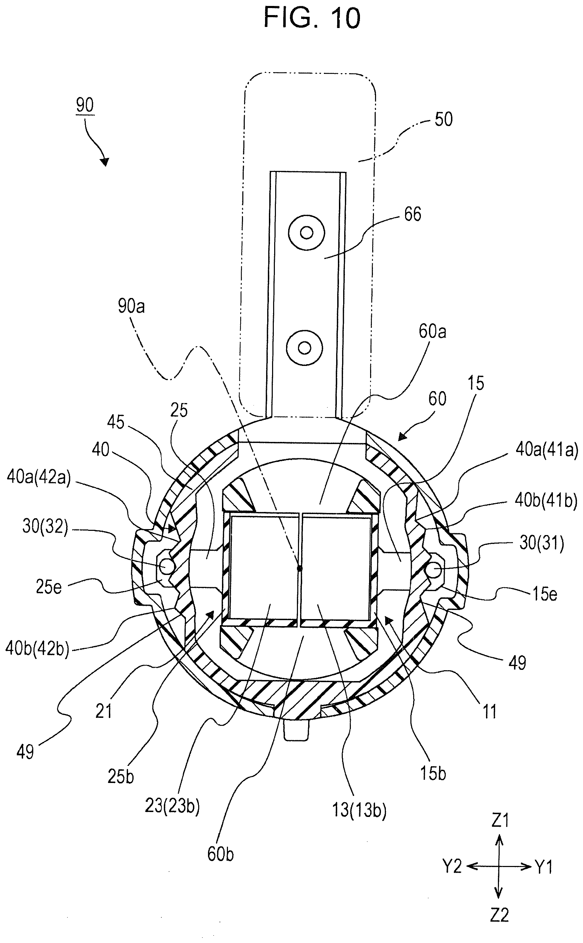

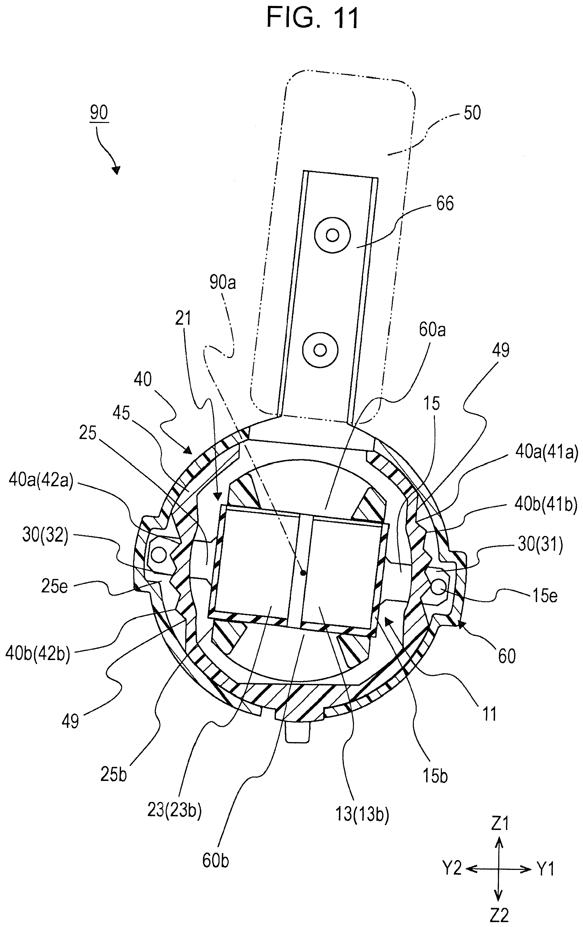

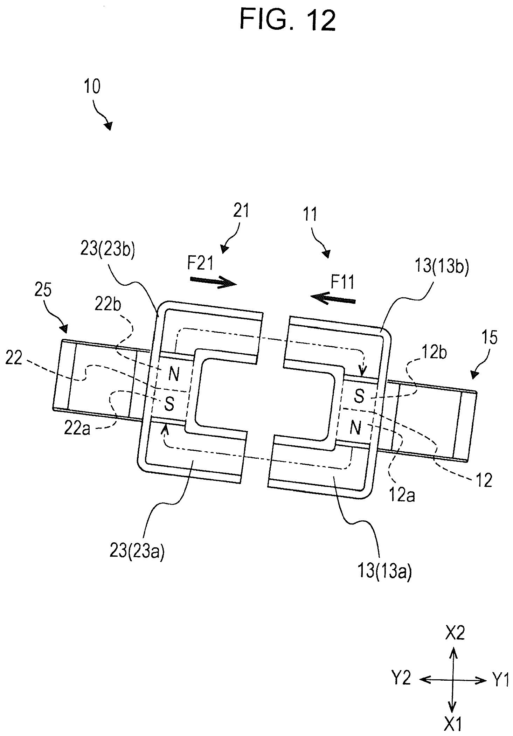

Next, operation of the click generation mechanism 90 in the present embodiment for generating a click feeling when the operation lever 50 is operated will be described with reference to Fig. 10 to Fig. 12. Fig. 10 is an explanatory diagram showing operation of the biasing force generation means 10 and is an explanatory diagram showing a stable state where the contact member 30 is received in the recess 40a of the cam member 40. Fig. 10 is a cross-sectional view of a cross-section taken along a line A-A in Fig. 3, as seen from the X1 side. Fig. 11 is an explanatory diagram showing operation of the biasing force generation means 10 and is an explanatory diagram showing a transient state where the contact member 30 is located at the projection 40b of the cam member 40. Fig. 12 is an explanatory diagram showing a magnetic line of force of the pair of magnetic bodies 11 and 21 in the state in Fig. 11 in a plan view.

As shown in Fig. 10, the contact member 31 and the contact member 32 are disposed such that the contact member 31 is brought into contact with the recess 41a on the cam surface 49 of the cam member 40 and the contact member 32 is brought into contact with the recess 42a on the cam surface 49 of the cam member 40. Accordingly, the pair of magnetic bodies 11 and 21 are separately disposed at two locations at which the two contact members 31 and 32 are separately biased, and are disposed near the imaginary central axis 90a so as to face each other. The pair of magnetic bodies 11 and 21 generate magnetic attraction forces in a direction in which the contact members 31 and 32 are made close to each other, and thus a stable state where the contact members 31 and 32 are received in the recesses 41a and 42a of the cam member 40, respectively is obtained. Therefore, even when an attempt to rotationally operate the operation lever 50 is made, the contact members 31 and 32 are returned to the stable positions in Fig. 10 unless the contact members 31 and 32 move beyond the projections 41b and 42b at both sides of the respective recesses 41a and 42a.

By applying force greater than the magnetic attraction forces by the pair of magnetic bodies 11 and 21 to rotationally operate the operation lever 50, the contact members 31 and 32 move relative to each other until a transient state where the contact members 31 and 32 are located at the projections 41b and 42b on the cam surfaces 49 of the cam member 40 as shown in Fig. 11. At this time, the pair of magnetic bodies 11 and 21 each move together with the holder member 15 or the holder member 25, which is in slide contact with the restriction portion 60a or 60b, in substantially the Y1-Y2 direction in which the magnetic bodies 11 and 21 are separated from each other. Thus, as shown in Fig. 12, the magnetic line of force of the pair of magnetic bodies 11 and 21 is directed such that the closed loop is widened, and thus is relatively weakened.

Magnetic attraction forces F11 and F21 in the transient state shown in Fig. 11 and Fig. 12 become smaller as the positions of the magnetic bodies 11 and 21 are further away from each other. Thus, forces of the contact members 31 and 32 to shave the projections 41b and 42b of the cam member 40 are also weakened. This effect is not obtained in the case of a biasing force generated by using expansion/contraction of the click spring, and is a characteristic effect achieved by disposing the magnetic bodies 11 and 21 as in the present embodiment.

Meanwhile, since the magnetic attraction forces become great in a state where the pair of magnetic bodies 11 and 21 are close to each other as shown in Fig. 10, it is possible to obtain a greater biasing force than a biasing force generated by using expansion/contraction of the click spring. As the biasing force becomes greater in this state, shaking is reduced. In the present embodiment, the biasing force becomes maximum at the recess 40a of the cam member 40, and shaking of the operation lever 50 is inhibited. In addition, the biasing force is directed such that the biasing force becomes greater even when the recess 40a is worn. Thus, shaking of the operation lever 50 does not occur. As a result, the life is extended. Moreover, as described above, when the biasing force is increased by the click spring, the force to shave a cam ridge is increased, and thus such an increased biasing force is not preferable. In the case where a biasing force that is equal to that by the click spring is obtained by magnetic attraction forces of the magnetic bodies 11 and 21 as in the present embodiment, a more preferable state is considered to be obtained than a state obtained with the click spring.

In the present embodiment, the four recesses 41a or 42a are formed on each cam surface 49 of the cam member 40, and thus it is possible to obtain a stable state at the four locations of the four recesses. That is, the operating device 100 of the present embodiment is able to generate a click feeling in the rotation direction three times, corresponding to operation states at the four locations, when the operation lever 50 is operated. In addition, when the number of recesses 41a or 42a is increased, it is possible to correspond to more operation states.

In the present embodiment, since the recesses 40a (41a, 42a) and the projections 40b (41b, 42b) are disposed so as to be point symmetrical with each other about the imaginary central axis 90a for rotation of the click generation mechanism 90, no bias is given in a direction deviated from the imaginary central axis 90a. Therefore, an additional biasing force is not generated in the operation lever 50, and thus a good operation feeling is generated.

Moreover, in the present embodiment, since the biasing force generation means 10 of the click generation mechanism 90 is disposed so as to be point symmetrical about a rotary operation, it is possible to generate a great holding force in a balanced manner. In addition, since the biasing force generation means 10, which uses the magnetic attraction forces of the pair of magnetic bodies 11 and 21, is housed within the cam member 40, and the cam member 40 is further housed within the restriction member 60, it is easy to achieve size reduction even in the case of expanding the range of movement. Therefore, it is possible to reduce the size of the click generation mechanism 90 as compared to the configuration of the related art.

Hereinafter, advantageous effects exhibited by the present embodiment will be described.

In the operating device 100 of the present embodiment, the attraction forces of the magnetic bodies 11 and 21 are used as a biasing force with respect to the contact member 30, the biasing force at the recess 40a of the cam member 40 becomes maximum, so that it is possible to inhibit shaking of the operation lever 50. In addition, even when the recess 40a is worn, the direction in which the recess 40a is worn is a direction in which the biasing force is further increased, and thus it is possible to extend the life. Therefore, it is possible to obtain the operating device 100 that provides a good operation feeling.

Moreover, since the magnetic bodies 11 and 21 used for generating a click feeling when operation is performed are also used for detecting a change of a magnetic flux due to a rotary operation, a magnet dedicated for detecting a magnetic flux is not required. Thus, it is possible to produce the operating device 100 at low cost.

Moreover, since the pair of magnetic bodies 11 and 21 are disposed within the cam member 40, it is possible to improve the space efficiency.

Moreover, since the pair of cam surfaces 49 are located so as to be point symmetrical with each other about the imaginary central axis 90a, it is possible to obtain a stronger click feeling.

Moreover, since the magnetic sensor 7 is disposed on the imaginary central axis 90a, it is possible to efficiently detect a change of a magnetic flux.

As described above, in the operating device according to the present invention, since the attraction forces of the magnetic bodies are used as the biasing force with respect to the contact member, and the biasing force becomes maximum at the recess of the cam member, it is possible to inhibit shaking of the operation lever. In addition, even when the recess is worn, the direction in which the recess is worn is a direction in which the biasing force is further increased, so that it is possible to extend the life. Therefore, it is possible to obtain an operating device that provides a good operation feeling.

The present invention is not limited to the above embodiment, and various modifications may be made without departing from the scope of the invention as defined in the appended Claims, to implement the present invention.

### Reference Signs List

- 7: magnetic sensor
- 9: wiring board
- 10: biasing force generation means
- 11: magnetic body
- 12: permanent magnet
- 12a: permanent magnet
- 12b: permanent magnet
- 13: yoke
- 13a: yoke
- 13b: yoke
- 15: holder member
- 15a: first holding portion
- 15b: second holding portion
- 15c: first opening
- 15d: second opening
- 15e: supporting portion
- 15f: hole
- 21: magnetic body
- 22: permanent magnet
- 22a: permanent magnet
- 22b: permanent magnet
- 23: yoke
- 23a: yoke
- 23b: yoke
- 25: holder member
- 25a: first holding portion
- 25b: second holding portion
- 25c: first opening
- 25d: second opening
- 25e: supporting portion
- 25f: hole
- 30: contact member
- 31: contact member
- 32: contact member
- 40: cam member
- 40a: recess
- 40b: projection
- 41a: recess
- 41b: projection
- 42a: recess
- 42b: projection
- 45: annular portion
- 45a: opening
- 49: cam surface
- 50: operation lever
- 60: restriction member
- 60a: restriction portions
- 60b: restriction portions
- 60c: cylindrical wall surface
- 62: cover
- 66: connection portion
- 70: signal output mechanism
- 80: housing
- 90: click generation mechanism
- 90a: imaginary central axis
- 100: operating device

## Claims

1. An operating device (100) comprising an operation lever (50), a housing (80), and a click generation mechanism (90) connected to the operation lever (50) and housed in the housing (80), the operating device (100) generating a click feeling when the operation lever (50) is operated, wherein
the click generation mechanism (90) includes a cam member (40) fixed to the housing (80) and having a cam surface (49) on which a recess (42a) and a projection are formed, a contact member (30, 31, 32) configured to come into contact with the cam member (40), a restriction member (60) configured to restrict a movement direction of the contact member (30, 31, 32), a biasing force generation means (10) configured to bias the contact member (30, 31, 32) in the movement direction, and a magnetic sensor (7) fixed to the housing (80),
the restriction member (60) is supported by the housing (80) so as to be rotationally movable in conjunction with the operation lever (50), **characterized in that**
the biasing force generation means (10) includes a pair of magnetic bodies (11, 22) at least either of which has a permanent magnet (12, 12a, 12b, 22, 22a, 22b), the pair of magnetic bodies (11, 22) are supported by the restriction member (60) such that the magnetic bodies (11, 22) rotationally move in conjunction with the restriction member (60) and are movable in an approaching/separating direction in a state where the magnetic bodies (11, 22) are attracted to each other,
the contact member (30, 31, 32) is biased to the cam surface (49) by an attraction force between the pair of magnetic bodies (11, 22), and **in that**
when the operation lever (50) is rotationally operated, the click feeling is generated through a change of a sliding load between the cam surface (49) and the contact member (30, 31, 32).

2. The operating device (100) according to claim 1, wherein a change of a magnetic flux of the pair of magnetic bodies (11, 22) that rotationally move is detected by the magnetic sensor (7).

3. The operating device (100) according to claim 1 or 2, wherein the cam member (40) is formed in substantially an annular shape, and the pair of magnetic bodies (11, 22) are disposed within the cam member (40).

4. The operating device (100) according to any one of claims 1 to 3, wherein the cam surface (49) includes a pair of cam surfaces (49) formed on the cam member (40), and the pair of cam surfaces (49) are located so as to be point symmetrical with each other about an imaginary central axis.

5. The operating device (100) according to claim 4, wherein the magnetic sensor (7) is disposed on the imaginary central axis.

## Patentansprüche

1. Betätigungsvorrichtung (100), aufweisend einen Betätigungshebel (50), ein Gehäuse (80) und einen Klickerzeugungsmechanismus (90), der mit dem Betätigungshebel (50) verbunden und in dem Gehäuse (80) untergebracht ist, wobei die Betätigungsvorrichtung (100) ein Klickgefühl erzeugt, wenn der Betätigungshebel (50) betätigt wird,
wobei der Klickerzeugungsmechanismus (90) aufweist: ein Steuerflächenelement (40), das an dem Gehäuse (80) befestigt ist und eine Steuerfläche (49) aufweist, an der eine Vertiefung (42a) und ein Vorsprung ausgebildet sind, ein Kontaktelement (30, 31, 32), das dazu ausgebildet ist, mit dem Steuerflächenelement (40) in Kontakt zu treten, ein Beschränkungselement (60), das dazu ausgebildet ist, eine Bewegungsrichtung des Kontaktelements (30, 31, 32) zu beschränken, eine Vorspannkraft-Erzeugungseinrichtung (10), die dazu ausgebildet ist, das Kontaktelement (30, 31, 32) in der Bewegungsrichtung vorzuspannen, und einen Magnetsensor (7), der an dem Gehäuse (80) befestigt ist,
wobei das Beschränkungselement (60) von dem Gehäuse (80) derart abgestützt ist, dass es in Verbindung mit dem Betätigungshebel (50) rotationsmäßig beweglich ist,
**dadurch gekennzeichnet, dass** die Vorspannkraft-Erzeugungseinrichtung (10) ein Paar Magnetkörper (11, 22) aufweist, von denen mindestens einer einen Permanentmagneten (12, 12a, 12b, 22, 22a, 22b) aufweist, wobei das Paar der Magnetkörper (11, 22) von dem Beschränkungselement (60) derart abgestützt ist, dass sich die Magnetkörper (11, 22) in Verbindung mit dem Beschränkungselement (60) rotationsmäßig bewegen und in einer Annäherungs- /Trennungsrichtung in einem Zustand beweglich sind, in dem die Magnetkörper (11, 22) aneinander angezogen sind,
dass das Kontaktelement (30, 31, 32) durch eine Anziehungskraft zwischen dem Paar der Magnetkörper (11, 22) in Richtung auf die Steuerfläche (49) vorgespannt ist, und
dass dann, wenn der Betätigungshebel (50) rotationsmäßig betätigt wird, das Klickgefühl durch eine Änderung einer Gleitlast zwischen der Steuerfläche (49) und dem Kontaktelement (30, 31, 32) erzeugt wird.

2. Betätigungsvorrichtung (100) nach Anspruch 1,
wobei eine Änderung eines Magnetflusses des Paares der sich rotationsmäßig bewegenden Magnetkörper (11, 22) durch den Magnetsensor (7) erfasst wird.

3. Betätigungsvorrichtung (100) nach Anspruch 1 oder 2,
wobei das Steuerflächenelement (40) im Wesentlichen ringförmig ausgebildet ist und das Paar der Magnetkörper (11, 22) innerhalb des Steuerflächenelements (40) angeordnet ist.

4. Betätigungsvorrichtung (100) nach einem der Ansprüche 1 bis 3,
wobei die Steuerfläche (49) ein Paar Steuerflächen (49) aufweist, die an dem Steuerflächenelement (40) ausgebildet sind, und das Paar der Steuerflächen (49) derart angeordnet ist, dass diese um eine imaginäre Mittelachse punktsymmetrisch zueinander sind.

5. Betätigungsvorrichtung (100) nach Anspruch 4,
wobei der Magnetsensor (7) auf der imaginären Mittelachse angeordnet ist.

## Revendications

1. Dispositif de commande (100) comprenant un levier de commande (50), un boîtier (80) et un mécanisme générateur de clic (90) relié au levier de commande (50) et logé dans le boîtier (80), le dispositif de commande (100) générant une sensation de clic lorsque le levier de commande (50) est actionné,
le mécanisme générateur de clic (90) incluant un élément de came (40) fixé au boîtier (80) et doté d'une surface de came (49) sur laquelle sont formés un évidement (42a) et une projection, un élément de contact (30, 31, 32) configuré de manière à entrer en contact avec l'élément de came (40), un élément de restriction (60) configuré de manière à restreindre une direction de mouvement de l'élément de contact (30, 31, 32), un moyen générateur d'une force de sollicitation (10) configuré de manière à agir sur l'élément de contact (30, 31, 32) dans la direction de mouvement, et un capteur magnétique (7) fixé au boîtier (80),
l'élément de restriction (60) étant supporté par le boîtier (80) de manière à être mobile en rotation en liaison avec le levier de commande (50), **caractérisé en ce que**
le moyen générateur de force de sollicitation (10) inclut une paire de corps magnétiques (11, 22) dont au moins un présente un aimant permanent (12, 12a, 12b, 22, 22a, 22b), la paire de corps magnétiques (11, 22) est supportée par l'élément de restriction (60) de telle sorte que les corps magnétiques (11, 22) bougent en rotation en liaison avec l'élément de restriction (60) et sont mobiles dans une direction de rapprochement/d'éloignement dans un état où les corps magnétiques (11, 22) sont attirés l'un vers l'autre,
l'élément de contact (30, 31, 32) est sollicité vers la surface de came (49) par une force d'attraction entre la paire de corps magnétiques (11, 22), et **en ce que**,
lorsque le levier de commande (50) est actionné en rotation, la sensation de clic est générée via le changement d'une charge de coulissement entre la surface de came (49) et l'élément de contact (30, 31, 32).

2. Le dispositif de commande (100) selon la revendication 1, dans lequel un changement de flux magnétique de la paire de corps magnétiques (11, 22) qui bougent en rotation est détecté par le capteur magnétique (7).

3. Le dispositif de commande (100) selon la revendication 1 ou 2, dans lequel l'élément de came (40) présente une forme sensiblement annulaire, et où la paire de corps magnétiques (11, 22) est disposée à l'intérieur de l'élément de came (40).

4. Le dispositif de commande (100) selon l'une quelconque des revendications 1 à 3, dans lequel la surface de came (49) inclut une paire de surfaces de came (49) formées sur l'élément de came (40), et où la paire de surfaces de came (49) est située de manière à être ponctuellement symétrique l'une par rapport à l'autre selon un axe central imaginaire.

5. Le dispositif de commande (100) selon la revendication 4, dans lequel le capteur magnétique (7) est disposé sur l'axe central imaginaire.
